# EUROPÄISCHE PATENTSCHRIFT

(11) **EP 1 788 373 B1**
(45) Veröffentlichungstag und Bekanntmachung des Hinweises auf die Patenterteilung: **10.03.2010**
(21) Anmeldenummer: 06124133.7
(22) Anmeldetag: 15.11.2006
(51) Int. Cl.: G01M 3/28, F15B 19/00

(54) **Prüfvorrichtung für Schlauchleitungen**
Hose testing device
Dispositif de contrôle de conduite souple

(30) Priorität: 18.11.2005 DE 202005018061 U
(43) Veröffentlichungstag der Anmeldung: 23.05.2007
(73) Patentinhaber: Dipl.-Ing. H. Schulz HDS Hydraulik GmbH & Co. KG, 51647 Gummersbach (DE)
(72) Erfinder: Siemens, Kornelius, 51647 Gummersbach (DE)
(74) Vertreter: Patentanwälte Dr. Solf & Zapf

(56) Entgegenhaltungen:
- DE-A1- 2 838 355
- DE-B- 1 120 758
- DE-B1- 1 573 464
- US-A- 2 364 709
- PATENT ABSTRACTS OF JAPAN Bd. 1996, Nr. 07, 31. Juli 1996 (1996-07-31) -& JP 08 075594 A (BRIDGESTONE FLOWTECH CORP), 22. März 1996 (1996-03-22)

## Beschreibung

Die vorliegende Erfindung betrifft eine Prüfvorrichtung für Schlauchleitungen, mit einem druckerzeugenden Fördersystem zur Befüllung einer Schlauchleitung mit einem zur Prüfung verwendeten Prüfmedium und zur Erzeugung eines Prüfdrucks sowie mit Armaturen, mittels derer die zu prüfende Schlauchleitung an das druckerzeugende Fördersystem anschließbar ist, wobei das druckerzeugende Fördersystem einen unter Vorspanndruck stehenden Druckspeicher als Vorratsbehälter für das Prüfmedium, aus dem unter der Wirkung des Vorspanndrucks über eine Füllleitung die Befüllung der Schlauchleitung erfolgt, und eine Pumpe umfasst, der eine Druckleitung zugeordnet ist.

Schläuche und Schlauchleitungen, insbesondere Hydraulikschlauchleitungen, werden unter anderem in hydraulischen Anlagen verschiedener Industriebereiche eingesetzt. Um für den vorgesehenen Einsatz eine zuverlässige sicherheitstechnische Beurteilungs- uns Vergleichsbasis zu schaffen, sind die Hersteller gehalten, zu sicherheitsrelevanten Eigenschaften, dem Ausfall- und Alterungsverhalten sowie zum Verhalten gegenüber Umgebungseinflüssen geeignete Daten zu erheben. So sind insbesondere in den Normen "Gummi-und Kunststoffschläuche und -schlauchleitungen - Hydrostatische Prüfung" (ISO 1402:2001) und "Schläuche und Schlauchleitungen, Prüfungen" (DIN 20024) Anforderungen an die Druckbelastbarkeit, u. a. von Hochdruckleitungen, festgelegt, wobei für die in der letztgenannten Norm aufgeführten Prüfverfahren inzwischen die internationalen Normen des ISO/TC 45 in das Deutsche Normenwerk übernommen wurden und verbindlich sind.

Hierbei sind Prüfvorrichtungen bekannt, die insbesondere der Prüfung von fertigen, d. h. mit Schlaucharmaturen konfektionierten Schlauchleitungen auf Dichtigkeit und Materialfehler, dienen. Darin wird eine zu prüfende Schlauchleitung über geeignete Anschlussarmaturen in einer Prüfkammer angeschlossen und bei gleichzeitiger Entlüftung durch eine Pumpe mit einer ÖI-Wasser-Emulsion als einem zur Prüfung verwendeten Prüfmedium befüllt. Nach Erreichen eines voreingestellten Prüfdruckes, der auf einem Manometer als Anzeigeeinrichtung für den Druck des Mediums abzulesen ist, wird durch Absperrung, insbesondere mit Hilfe eines Ventils als Absperrorgan, die Druckverbindung des Prüflings mit der Pumpe aufgehoben, um danach während einer sich anschließenden Druckhaltezeit eventuelle Undichtigkeiten festzustellen. Nach Ablauf der Haltezeit wird der Druck in der Schlauchleitung abgebaut und die Leitung kann anschließend entleert bzw. ausgeblasen werden. In bekannten Prüfvorrichtungen werden die Schlauchleitungen dabei mit einer Vorfüllpumpe befüllt und anschließend durch eine Hochdruckpumpe auf Prüfdruck gebracht. Beide Pumpen, die ein druckerzeugendes System bilden, sind bekanntermaßen einfachwirkende Pumpen, d. h. die Befüllung der Schlauchleitung mit dem zur Prüfung verwendeten Prüfmedium erfolgt stoßweise mit geringem Volumen und dauert relativ lange. Außerdem ist dieser Vorgang mit einem erheblichen Geräuschpegel verbunden. Der Verbrauch der Vorfüllpumpe an zur Druckerzeugung verwendeter Luft kann dabei bekanntermaßen bei Werten von bis zu etwa 1,6 m³/min liegen.

Aus der DE-A-28 38 355 ist ein Dehnschlauchprüfstand bekannt, in dem Schläuche bei hohem Druck und bei hohen Temperaturen mittels einer Pumpe und verschiedener Ventile auf Dauerhaltbarkeit geprüft werden. Diese bekannte Vorrichtung weist eine Aufnahmeeinrichtung für mehrere parallel zueinander geschaltete Schläuche auf, die durch ein während einer variablen Prüfzeit durch sie ständig hindurchströmendes Medium geprüft werden, das nach variablen Kennlinien abwechselnd auf hohe und niedere Drücke gebracht wird, die während vorbestimmter, auch sehr langer Zeitabschnitte konstant gehalten werden. Während einer Niederdruckphase, während der in den Leitungen ein Druck von höchstens 1 bar herrscht, strömt dabei insbesondere Öl - gefördert von einer Hydraulikpumpe - aus einem Tank über ein Vorspannventil durch die zu prüfenden Schäuche sowie über eine Anschlussleitung und ein Servoventil zurück in den Tank. Während einer sich anschließenden Druckanstiegphase schaltet das Servoventil den Rückfluss zum Tank ab, und durch einen Teil der Rückflussleitung öffnet sich ein Leitungsweg zu den Prüflingen, wobei der Speicher der Pumpe beim Druckaufbau hilft. Über ein Rückschlagventil und ein Vorspannventil wird dabei verhindert, dass der erhöhte Druck auf die Hydraulikpumpe zurückwirkt.

Die US-A-2 364 709 beschreibt einen tragbaren Prüfstand zur Prüfung hydraulischer Bauteile an Flugzeugen mit einem in einem Rahmen montierten Reservoir für ein unter Atmosphärendruck befindliches Fluid. Es sind drei Einrichtungen für eine Förderung des Fluids unter höherem Druck vorgesehen, und zwar eine motorbetriebene Hochdruckpumpe, eine handbetriebene Niederdruckpumpe und ein hydraulischer Speicher. Ausgehend von der motorgetriebenen Pumpe kann das Fluid über ein Drei-Wege-Ventil entweder abgesperrt oder zu einem Druckstutzen, zu einer Leitung mit mittlerem Druck oder zu dem hydraulischen Speicher geführt werden. Durch entsprechende Einstellung verschiedener weiterer Ventile ist es möglich, das Fluid unter dem Druck, der durch den hydraulischen Speicher und/oder der Hochdruckpumpe erzeugt wird, zu Anschlussstutzen zu fördern, an die über Schläuche die zu prüfenden Flugzeugbauteile angeschlossen werden können.

Der vorliegenden Erfindung liegt die Aufgabe zu Grunde, eine Prüfvorrichtung der eingangs beschriebenen Art derart zu verbessern, dass sie bei unbeeinträchtigter Funktionserfüllung eine Einsparung des Druckluftverbrauchs ermöglicht sowie einen reduzierten Wartungsbedarf und einen niedrigeren Geräuschpegel aufweist.

Diese Aufgabe wird mit einer Prüfvorrichtung gemäß Anspruch 1 gelöst.

In der erfindungsgemäßen Prüfvorrichtung wird somit keine Vorfüllpumpe eingesetzt, wodurch gegenüber den eingangs beschriebenen Prüfvorrichtungen eine erhebliche Einsparung des Druckluftverbrauchs erzielt werden kann.

Die erfindungsgemäße Prüfvorrichtung ist dabei sehr funktionssicher sowie wartungs- und geräuscharm, da nach einem Prüfstart das Prüfmedium impulsfrei und kontinuierlich die angeschlossene Schlauchleitung füllt.

Außerdem ermöglicht die erfindungsgemäße Prüfvorrichtung schnelle Prüfungen, insbesondere - im Vergleich mit bekannten Vorrichtungen - eine bis zu 100 Prozent gesteigerte Effektivität der Prüfung, was sie für einen in die Fertigungslinie eingebundenen Einsatz bei in Serienproduktion hergestellten Schlauchleitungen prädestiniert.

Eine zusätzliche Effektivitätssteigerung wird des Weiteren auch dadurch möglich, dass hinter dem Druckspeicher und der Hochdruckpumpe zwei oder mehr Prüfkammern in Parallelschaltung mit jeweils einem Absperrorgan zwischen dem druckerzeugenden System und der Prüfkammer angeordnet sind.

In bevorzugter Ausführung kann dabei insbesondere vorgesehen sein, dass dem Druckspeicher eine Filtergruppe zur Reinigung des Prüfmediums vorgeschaltet ist. Die Filtergruppe kann dabei mehrere Filterstufen umfassen, deren letzte insbesondere nur Partikel einer Feinheit von weniger als 3 µm passieren lässt. Die Standzeiten aller Bauteile in der erfindungsgemäßen Prüfvorrichtung werden durch diese Feinfilterung erheblich gesteigert. Die Standzeit des Prüfmediums kann sogar bis auf den vierfachen Wert gesteigert werden.

Schließlich kann bei der erfindungsgemäßen Prüfvorrichtung vorgesehen sein, dass an den Druckspeicher eine Spülpistole angeschlossen ist, die über mit Hilfe von Absperrorganen bedarfsweise zu- und abschaltbare separate Verbindungsleitungen jeweils mit der Prüfkammer verbunden ist. Dadurch entfällt mit Vorteil die Notwendigkeit des Einsatzes von zusätzlichen Aggregaten zur Erfüllung der Spülfunktion.

Weitere vorteilhafte Ausführungen der Erfindung sind in den Unteransprüchen und der nachfolgenden speziellen Beschreibung enthalten.

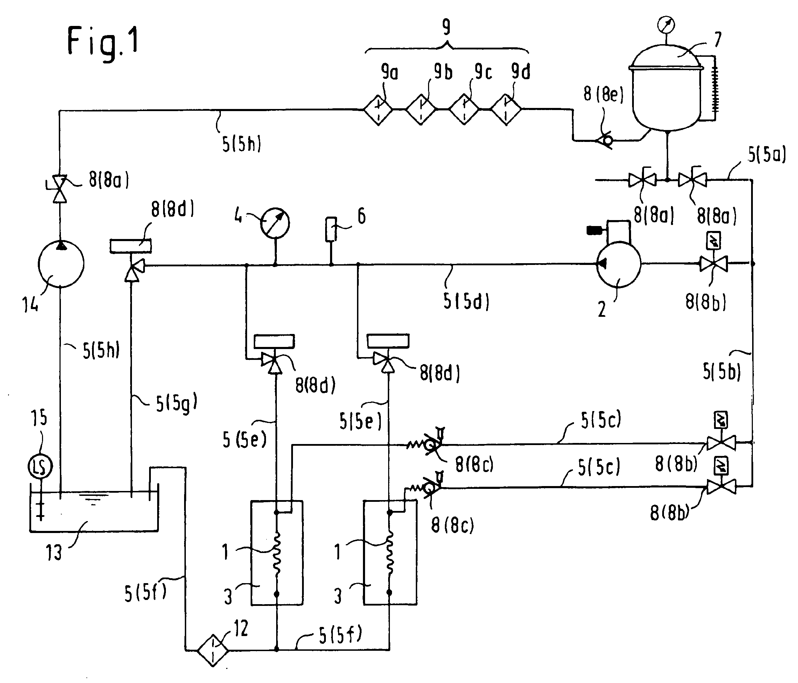

Anhand des in den Zeichnungen dargestellten Ausführungsbeispiels wird die Erfindung näher erläutert. Dabei zeigt
- Fig. 1: einen Schaltplan einer erfindungsgemäßen Prüfvorrichtung.

Wie aus dem Schaltplan hervorgeht, weist eine erfindungsgemäße Prüfvorrichtung für Schlauchleitungen 1 ein druckerzeugendes Fördersystem zur Befüllung einer Schlauchleitung 1 mit einem zur Prüfung verwendeten Prüfmedium, vorzugsweise einer ÖI-Wasser-Emulsion, auf. Dieses druckerzeugende Fördersystem umfasst als Pumpe ausschließlich eine Hochdruckpumpe 2, die den Prüfdruck des Prüfmediums erzeugt. Bei der Schlauchleitung 1 handelt es sich insbesondere um eine mit einer Anschlussarmatur konfektionierte Hydraulikschlauchleitung.

Des Weiteren sind der erfindungsgemäßen Prüfvorrichtung bevorzugt mindestens eine Prüfkammer 3 - im dargestellten Fall zwei parallel geschaltete Prüfkammern 3 - zugehörig, wo die zu prüfenden Schlauchleitungen 1 jeweils über eine - nicht dargestellte - Anschlussarmatur an das druckerzeugende Fördersystem anschließbar sind.

Zur Anzeige des Drucks des Prüfmediums in der Schlauchleitung 1 dient mindestens eine Anzeigeeinrichtung 4, wie ein Manometer, die im dargestellten Fall in einer Verbindungsleitung 5, deren Einzelabschnitte individuell auch 5a bis 5h bezeichnet sind und im Detail nachfolgend noch beschrieben werden, hinter der Hochdruckpumpe 2 angeordnet ist. Zusätzlich können weitere Anzeige-, Regelungs-, Kontroll- und/oder Registriergeräte vorgesehen sein, für die stellvertretend der mit dem Bezugszeichen 6 bezeichnete Sensor steht.

Für das Prüfmedium ist ein Vorratsbehälter vorgesehen, der erfindungsgemäß als unter Vorspanndruck stehender Druckspeicher 7 ausgebildet ist. Die Hochdruckpumpe 2 und der Druckspeicher 7 bilden zusammen - mit den notwendigerweise vorhandenen Verbindungsleitungen 5 - das druckerzeugende För dersystem, wobei vorzugsweise der Vorspanndruck allein ausreichend ist, um eine Befüllung der Schlauchleitung 1 zu gewährleisten.

Fig. 1 zeigt des Weiteren verschiedene Absperrorgane 8, die individuell mit den Bezugszeichen 8a bis 8e bezeichnet sind, wobei jeweils 8a einen Kugelhahn, 8b ein insbesondere zentral ansteuerbares Absperrventil, 8c ein federbelastetes Rückschlagventil, 8d ein Hochdruckventil und 8e ein Rückschlagventil bezeichnen. So befinden sich beispielsweise zwei Kugelhähne 8a als Auslassorgane direkt am Druckspeicher 7. Zwischen dem Druckspeicher 7 und der Hochdruckpumpe 2 und jeweils zwischen dem Druckspeicher 7 und jeder Prüfkammer 3 befinden sich die genannten Absperrventile 8b, durch die die zugeordneten Prüfkammern 3 jeweils bedarfsweise zu- und abschaltbar sind. Dabei sind den Absperrventilen 8b unmittelbar vor den Prüfkammern 3 federbelastete Rückschlagventile 8c nachgeordnet. Jeweils hinter der Hochdruckpumpe 2 und vor jeder der Prüfkammern 3 ist mindestens ein, vorzugsweise zentral ansteuerbares, Hochdruckventil 8d für das Prüfmedium angeordnet.

Dem Druckspeicher 7 ist eine Filtergruppe 9 zur Reinigung des Prüfmediums vorgeschaltet. Diese Filtergruppe 9 umfasst mehrere Filterstufen 9a, 9b, 9c, 9d, deren letzte Filterstufe 9d insbesondere nur Partikel einer Feinheit von weniger als 3 µm passieren läßt. Im Sinne einer effizienten Filterung kann dabei folgende Abstufung der durchgelassenen Partikelfeinheit in der Filtergruppe 9 vorgesehen sein: weniger als 100 µm in der ersten Filterstufe 9a, weniger als 25 µm in der zweiten Filterstufe 9b, weniger als 10 µm in der dritten Filterstufe 9c, weniger als 3 µm in der vierten Filterstufe 9d.

Die erfindungsgemäße Prüfvorrichtung bildet dabei mit Vorteil einen geschlossenen Kreislauf, in dem das Prüfmedium jeweils aus der Prüfkammer 3, insbesondere über einen Vorfilter 12, einen Sammelbehälter 13 und die Filtergruppe 9, vorzugsweise mit Hilfe einer Rückführpumpe 14, in den Druckspeicher 7 zurückgeführt wird.

Zur erfindungsgemäßen verfahrensmäßigen Realisierung einer Dichtigkeitsprüfung in der erfindungsgemäßen Prüfvorrichtung wird die zu prüfende Schlauch leitung 1 zunächst über geeignete Anschlussarmaturen in der Prüfkammer 3 angeschlossen. Nachdem dies geschehen ist, gelangt bei geöffnetem Kugelhahn 8a das Prüfmedium aus dem Druckspeicher 7 über ein erstes Stück 5a der Verbindungsleitungen 5 zu dem Absperrventil 8b vor der Hochdruckpumpe 2 und über ein zweites Stück 5b zu jeweils einem Absperrventil 8b, z. B. einem Magnetventil, welches seinerseits jeweils vor einem - auch als Füllleitung zu betrachtendem - Zuleitungsstück 5c der Verbindungsleitungen 5 liegt.

Das Absperrventil 8b vor der Hochdruckpumpe 2 und das Absperrventil 8b vor dem Zuleitungsstück 5c zur Prüfkammer 3 werden gleichzeitig geöffnet. Bei gleichzeitiger Entlüftung füllt dann das aus dem Druckspeicher 7 über das Zuleitungsstück 5c kommende Prüfmedium impulsfrei und kontinuierlich die angeschlossene Schlauchleitung 1, wobei gleichzeitig das Prüfmedium durch den Vorspanndruck im Druckspeicher 7 auch in die Hochdruckpumpe 2 gefördert wird, die den Prüfdruck über ein - auch als Druckleitung zu betrachtendes - parallel zur Füllleitung verlaufendes Rohrleitungsstück 5d vor dem jeweiligen Hochdruckventil 8d sowie ein weiteres Rohrleitungsstück 5e zwischen Hochdruckventil 8d und Prüfkammer 3 aufbaut. Das der aktiven Prüfkammer 3 zugeordnete Hochdruckventil 8d ist dabei geöffnet. Dabei wird der Prüfdruck durch keine weitere Pumpe als die dargestellte Hochdruckpumpe 2 erzeugt. Die Rückschlagventile 8c verhindern dabei, dass das Prüfmedium durch den erzeugten Hochdruck in das Zuleitungsstück 5c zurück gedrückt wird.

Nach Erreichen des vorbestimmten Prüfdruckes, der auf dem Manometer 4 abzulesen ist, wird durch Schließen des Hochdruckventils 8d die Druckverbindung der Schlauchleitung 1 mit der Pumpe 2 aufgehoben. Während einer sich anschließenden, den einschlägigen Normvorschriften entsprechenden Druckhaltezeit können dann durch einen Druckabfall in der Schlauchleitung 1 eventuell vorhandene Undichtigkeiten festgestellt werden, so dass eine Aussonderung der gegebenenfalls nicht normgerechten Schlauchleitungen 1 erfolgen kann.

Nach Ablauf der Haltezeit wird der Druck in der Schlauchleitung 1 abgebaut und die Schlauchleitung 1 kann anschließend entleert bzw. ausgeblasen und entfernt werden. Unter Einsatz der bereits erwähnten Spülpistole kann auch ein Spülen der Prüfkammer 3 erfolgen. Die Entleerung der Prüfkammer 3 kann über einen oder mehrere Leitungsabschnitte 5f erfolgen, durch die das Prüfmedium nach einer Vorreinigung im Vorfilter 12 in den Sammelbehälter 13 geleitet wird, wo es aufgefangen und zwischenbevorratet wird.

Durch eine in Fig. 1 dargestellte, die Prüfkammern 3 umgehende, von der Hochdruckpumpe 2 direkt in den Sammelbehälter 13 führende, über ein weiteres zugeordnetes Hochdruckventil 8d ab- und zuschaltbare Bypass-Leitung 5g kann der Druckabbau in dem Leitungsstück 5d hinter der Hochdruckpumpe 2 sowie bedarfsweise auch eine Entleerung vorgenommen werden.

Durch die Parallelschaltung der Prüfkammern 3 kann in effektivitätssteigernder Weise in einer der beiden Prüfkammern 3 der Prüfvorgang der Schlauchleitung 1 ablaufen, während gleichzeitig in der anderen Prüfkammer 3 ein Wechsel der Schlauchleitung 1 oder - mit geringem Zeitversatz - eine weitere Druckprüfung oder auch eine Spülung vorgenommen wird.

Aus dem Sammelbehälter 13 kann über die Filtergruppe 9 mit Hilfe der Rückführpumpe 14 das Prüfmedium jederzeit - periodisch oder insbesondere kontinuierlich - über eine Rückleitung 5h in den Druckspeicher 7 zurückgeführt werden, unabhängig davon, ob ein Prüfvorgang oder welche Phase des Prüfvorgangs in den Prüfkammern 3 abläuft. Für den durch die Rückführpumpe 14 im Druckspeicher 7 erzeugten Druck kann dabei ein geeigneter, durch einen Minimal- und einen Maximalwert begrenzter Schwankungsbereich vorgesehen sein. Die Kontrolle des Füllstandes im Sammelbehälter 13 kann - wie dargestellt - über einen Füllstandsmesser 15 erfolgen.

Die Erfindung zeichnet sich neben der Vorteilhaftigkeit der bereits erwähnten impulsfreien Befüllung auch dadurch aus, dass wegen des an der Hochdruckpumpe 2 anliegenden Vordrucks die geforderten Betriebsbedingungen, insbesondere also die Prüfdrücke, etwa dreimal so schnell aufgebaut werden können wie in herkömmlichen Systemen. Die geschlossene Führung des Prüfmediums mit dem unter Vorspanndruck stehenden Druckspeicher 7 arbeitet äußerst energieeffizient und stellt - da die Leitungen 5 bei Ablauf des erfindungsgemäßen Verfahrens immer entlüftet ist - auch einen kaum störgefährdeten System-Kreislauf dar. Zum Druckspeicher 7 müssen dabei keine elektrischen Kabel hingeführt werden. Der steuerungstechnische Aufwand minimiert sich dabei im Vergleich zu herkömmlichen Prüfeinrichtungen auf etwa ein Viertel. Dabei beschränkt sich die Erfindung nicht auf das beschriebene Ausführungsbeispiel, sondern umfasst auch alle im Sinne der Erfindung gleichwirkenden Ausführungen. So fällt es beispielsweise auch in den Rahmen der Erfindung, wenn für die beschriebenen Bestandteile der erfindungsgemäßen Prüfvorrichtung neben den Prüfkammern 3 weitere Bauteile in redundanter Schaltung vorgesehen sind.

An den Druckspeicher 7 kann - wie bereits erwähnt - auch jeweils eine nicht dargestellte Spülpistole für die Prüfkammern 3 angeschlossen sein oder angeschlossen werden. Die Spülpistole kann sich dabei an den Anschlussleitungen befinden, die den Prüfkammern 3 zugeordnet sind.

Des Weiteren ist erfindungsgemäß vorgesehen, dass das Zuleitungsstück 5c, welches das Prüfmedium aus dem Druckspeicher 7 zur Prüfkammer 3 führt, und das Rohrleitungsstück 5d, welches das Prüfmedium aus der Hochdruckpumpe 2 zur Prüfkammer 3 führt, unterschiedlich große Querschnitte aufweisen, nämlich, dass der Durchmesser des Zuleitungsstückes 5c - beispielsweise mit einer Abmessung von etwa 12mm - größer ist als der Durchmesser des Rohrleitungsstückes 5d - beispielsweise mit einer Abmessung von etwa 8mm.

### Bezugszeichen

- 1: Schlauchleitung
- 2: Hochdruckpumpe
- 3: Prüfkammer für 1
- 4: Druckanzeigeeinrichtung
- 5: Verbindungsleitung - individuell auch 5a bis 5h
- 5a: erstes Stück von 5, hinter 7
- 5b: zweites Stück von 5, hinter 7
- 5c: Zuleitungsstück von 5 zu 3, Füllleitung
- 5d: Rohrleitungsstück vor 8d, Druckleitung
- 5e: Rohrleitungsstück zwischen 8d und 3
- 5f: Leitungsabschnitt(e) zwischen 3 und 13
- 5g: Bypass-Leitung zu 3
- 5h: Rückleitung von 13 zu 7
- 6: Sensor
- 7: Vorratsbehälter, Druckspeicher
- 8: Absperrorgan - individuell auch 8a bis 8e
- 8a: Kugelhahn
- 8b: Absperrventil, steuerbar
- 8c: Rückschlagventil, federbelastet
- 8d: Hochdruckventil, steuerbar
- 8e: Rückschlagventil
- 9: Filtergruppe mit Filterstufen 9a bis 9d
- 12: Vorfilter
- 13: Sammelbehälter
- 14: Rückführpumpe
- 15: Füllstandsmesser für 13

## Patentansprüche

1. Prüfvorrichtung für Schlauchleitungen (1), mit einem druckerzeugenden Fördersystem (2, 5, 7) zur Befüllung einer Schlauchleitung (1) mit einem zur Prüfung verwendeten Prüfmedium und zur Erzeugung eines Prüfdrucks sowie mit Armaturen, mittels derer die zu prüfende Schlauchleitung (1) an das druckerzeugende Fördersystem (2, 5, 7) anschließbar ist, wobei das druckerzeugende Fördersystem (2, 5, 7) einen unter Vorspanndruck stehenden Druckspeicher (7) als Vorratsbehälter für das Prüfmedium, aus dem unter der Wirkung des Vorspanndrucks über eine zur Prüfvorrichtung gehörende Füllleitung (5c) die Befüllung der Schlauchleitung (1) erfolgt, und als Pumpe (2) ausschließlich eine Hochdruckpumpe (2) umfasst, der eine zur Prüfvorrichtung gehörende Druckleitung (5d) zugeordnet ist und die über die ihr zugeordnete Druckleitung (5d) den Prüfdruck aufbauten kann, wobei diese Druckleitung (5d) parallel zu der Füllleitung (5c) angeordnet ist, die Druckleitung (5d) und die Füllleitung (5c) unterschiedlich große Querschnitte aufweisen und der Durchmesser der Füllleitung (5c) größer ist als der Durchmesser der Druckleitung (5d).

2. Prüfvorrichtung nach Anspruch 1,
**dadurch gekennzeichnet, dass** dem Druckspeicher (7) eine zur Prüfvorrichtung gehörende Filtergruppe (9) zur Reinigung des Prüfmediums in Durchströmungsrichtung vorgeschaltet ist.

3. Prüfvorrichtung nach Anspruch 2,
**dadurch gekennzeichnet, dass** die Filtergruppe (9) mehrere Filterstufen (9a, 9b, 9c, 9d) umfasst, deren letzte Filterstufe (9d) insbesondere nur Partikel einer Feinheit von weniger als 3 µm passieren läßt.

4. Prüfvorrichtung nach einem der Ansprüche 1 bis 3,
**dadurch gekennzeichnet, dass** die Armaturen, mittels derer die zu prüfende Schlauchleitung (1) an das druckerzeugende Fördersystem (2, 5, 7) anschließbar ist, in einer zur Prüfvorrichtung gehörenden Prüfkammer (3), vorzugsweise in zwei oder mehr parallel geschalteten zur Prüfvorrichtung gehörendes Prüfkammern (3) in Durchströmungsrichtung hinter dem Druckspeicher (7) und der Hochdruckpumpe (2), angeordnet sind.

5. Prüfvorrichtung nach einem der Ansprüche 1 bis 4,
**dadurch gekennzeichnet, dass** jeweils in Durchströmungsrichtung vor den Armaturen, mittels derer die zu prüfende Schlauchleitung (1) an das druckerzeugende Fördersystem (2, 5, 7) anschließbar ist, sowohl in Durchströmungsrichtung vor der Hochdruckpumpe (2) und der der Hochdruckpumpe zugeordneten Druckleitung (5d) als auch in Durchströmungsrichtung vor der parallel zur Druckleitung (5d) geschalteten Füllleitung (5c) ein zur Prüfvorrichtung gehörendes Absperrorgan (8), wie ein zentral ansteuerbares Absperrventil (8b), angeordnet ist.

6. Prüfvorrichtung nach einem der Ansprüche 1 bis 5,
**dadurch gekennzeichnet, dass** in Durchströmungsrichtung vor den Armaturen, mittels derer die zu prüfende Schlauchleitung (1) an das druckerzeugende Fördersystem (2, 5, 7) anschließbar ist, und hinter der Hochdruckpumpe (2) ein zur Prüfvorrichtung gehörendes Absperrorgan (8), wie ein zentral ansteuerbares Hochdruckventil (8d), angeordnet ist.

7. Prüfvorrichtung nach einem der Ansprüche 1 bis 6, und dem Anspruch 4
**dadurch gekennzeichnet, dass** an den Druckspeicher (7) mindestens eine Spülpistole angeschlossen oder anschließbar ist, die über mit Hilfe von Absperrorganen bedarfsweise zu- und abschaltbare separate Anschlussleitungen jeweils mit der/den Prüfkammer(n) (3) verbunden bzw. verbindbar ist.

8. Prüfvorrichtung nach einem der Ansprüche 1 bis 7,
**gekennzeichnet durch** einen geschlossenen Kreislauf, in dem das Prüfmedium über eine zur Prüfvorrichtung gehörende Verbindungsleitung (5) vorzugsweise jeweils aus der Prüfkammer (3), insbesondere über einen Vorfilter (12), einen Sammelbehälter (13) und/oder eine/die Filtergruppe (9), vorzugsweise mit Hilfe einer Rückführpumpe (14), in den Druckspeicher (7) rückführbar ist.

## Claims

1. A testing apparatus for hose lines (1), with a pressure-generating conveying system (2, 5, 7) for filling a hose line (1) with a testing medium - used for testing purposes - and for generating a testing pressure, as well as with fittings by means of which the hose line (1) to be tested is capable of being attached to the pressure-generating conveying system (2, 5, 7), wherein the pressure-generating conveying system (2, 5, 7) comprises a pressure reservoir (7) - which is under pre-stressing pressure and from which the hose line (1) is filled under the action of the pre-stressing pressure by way of a filling line (5c) belonging to the testing apparatus - as a storage tank for the testing medium and, exclusively as the pump (2), a high-pressure pump (2) with which a pressure line (5d) belonging to the testing apparatus is associated and which can build up the testing pressure by way of the pressure line (5d) associated with it, wherein the said pressure line (5d) is arranged parallel to the filling line (5c), the pressure line (5d) and the filling line (5c) have diameters of different size and the diameter of the filling line (5c) is larger than the diameter of the pressure line (5d).

2. A testing apparatus according to Claim 1, **characterized in that** a filter group (9) belonging to the testing apparatus is arranged upstream of the pressure reservoir (7) in the direction of the through-flow in order to clean the testing medium.

3. A testing apparatus according to Claim 2, **characterized in that** the filter group (9) comprises a plurality of filter stages (9a, 9b, 9c, 9d), the last filter stage (9d) of which in particular allows only particles of a fineness of less than 3 µm to pass.

4. A testing apparatus according to any one of Claims 1 to 3, **characterized in that** the fittings, by means of which the hose line (1) to be tested is capable of being attached to the pressure-generating conveying system (2, 5, 7), are arranged in a testing chamber (3) belonging to the testing apparatus, preferably in two or more testing chambers (3) belonging to the testing apparatus and arranged in parallel, downstream of the pressure reservoir (7) and the high-pressure pump (2) in the direction of the through-flow.

5. A testing apparatus according to any one of Claims 1 to 4, **characterized in that** a shut-off member (8) belonging to the testing apparatus, such as a shut-off valve (8b) capable of being actuated centrally, is arranged upstream - in the direction of the through-flow - of the fittings, by means of which the hose line (1) to be tested is capable of being attached to the pressure-generating conveying system (2, 5, 7), and upstream - in the direction of the through-flow - of the high-pressure pump (2) and the pressure line (5d) associated with the high-pressure pump, as well as upstream - in the direction of the through-flow - of the filling line (5c) arranged parallel to the pressure line (5d), in each case.

6. A testing apparatus according to any one of Claims 1 to 5, **characterized in that** a shut-off member (8) belonging to the testing apparatus, such as a shut-off valve (8d) capable of being actuated centrally, is arranged upstream - in the direction of the through-flow - of the fittings, by means of which the hose line (1) to be tested is capable of being attached to the pressure-generating conveying system (2, 5, 7), and downstream of the high-pressure pump (2).

7. A testing apparatus according to any one of Claims 1 to 6, and Claim 4, **characterized in that** at least one washing gun, which is connected or is capable of being connected in each case to the testing chamber or chambers (3) by way of separate attachment lines capable of being turned on and off when required with the aid of shut-off members, is attached or is capable of being attached to the pressure reservoir (7).

8. A testing apparatus according to any one of Claims 1 to 7, **characterized by** a closed circuit, in which the testing medium is capable of being recirculated into the pressure reservoir (7) by way of a connecting line (5) belonging to the testing apparatus preferably out of the testing chamber (3) in each case, in particular by way of a preliminary filter (12), a collecting tank (13) and/or a or the filter group (9), preferably with the aid of a recirculating pump (14).

## Revendications

1. Dispositif de contrôle pour des conduites souples (1), doté d'un système d'alimentation (2, 5, 7) générateur de pression permettant de remplir une conduite souple (1) avec un milieu de contrôle employé pour contrôler et permettant de générer une pression de contrôle, doté également de robinetteries au moyen desquelles la conduite souple (1) à contrôler peut être raccordée au système d'alimentation (2, 5, 7) générateur de pression, le système d'alimentation (2, 5, 7) générateur de pression comprenant un accumulateur de pression (7) soumis à une pression de prétension et servant de réservoir de stockage pour le milieu de contrôle, à partir duquel est effectué le remplissage de la conduite souple (1) sous l'action de la pression de prétension par le biais d'une conduite de remplissage (5c) faisant partie du dispositif de contrôle, et comprenant en tant que pompe (2) exclusivement une pompe haute pression (2), à laquelle est affectée une conduite de pression (5d) faisant partie du dispositif de contrôle et qui peut établir la pression de contrôle par le biais de la conduite de pression (5d) qui lui est affectée, cette conduite de pression (5d) étant disposée de manière parallèle par rapport à la conduite de remplissage (5c), la conduite de pression (5d) et la conduite de remplissage (5c) présentant des sections de différentes tailles et le diamètre de la conduite de remplissage (5c) étant plus grand que le diamètre de la conduite de pression (5d).

2. Dispositif de contrôle selon la revendication 1,
**caractérisé en ce qu'**un groupe filtrant (9), faisant partie du dispositif de contrôle et destiné au nettoyage du milieu de contrôle, est monté devant l'accumulateur de pression (7).

3. Dispositif de contrôle selon la revendication 2,
**caractérisé en ce que** le groupe filtrant (9) comporte plusieurs étages filtrants (9a, 9b, 9c, 9d) dont le dernier étage filtrant (9d) ne laisse passer en particulier que des particules d'une finesse de moins de 3 µm.

4. Dispositif de contrôle selon l'une quelconque des revendications 1 à 3,
**caractérisé en ce que** les robinetteries, au moyen desquelles la conduite souple (1) à contrôler peut être raccordée au système d'alimentation (2, 5, 7) générateur de pression, sont disposées dans une chambre de contrôle (3) faisant partie du dispositif de contrôle, de préférence dans deux chambres de contrôle (3) ou plus appartenant au dispositif de contrôle et montées en parallèle dans la direction de l'écoulement derrière l'accumulateur de pression (7) et la pompe haute pression (2).

5. Dispositif de contrôle selon l'une quelconque des revendications 1 à 4,
**caractérisé en ce que** respectivement dans la direction de l'écoulement devant les robinetteries, au moyen desquelles la conduite souple (1) à contrôler peut être raccordée au système d'alimentation (2, 5, 7) générateur de pression, aussi bien dans la direction de l'écoulement devant la pompe haute pression et la conduite de pression (5d) affectée à la pompe haute pression que dans la direction de l'écoulement devant la conduite de remplissage (5c) montée en parallèle à la conduite de pression (5d) est disposé un organe d'arrêt (8), faisant partie du dispositif de contrôle, tel qu'une soupape d'arrêt (8b) pouvant être commandée de manière centrale.

6. Dispositif de contrôle selon l'une quelconque des revendications 1 à 5,
**caractérisé en ce que** dans la direction de l'écoulement devant les robinetteries au moyen desquelles la conduite souple (1) à contrôler peut être raccordée au système d'alimentation (2, 5, 7) générateur de pression et derrière la pompe haute pression (2) est disposé un organe d'arrêt (8), faisant partie du dispositif de contrôle, tel qu'une soupape de haute pression (8d) pouvant être commandée de manière centrale.

7. Dispositif de contrôle selon l'une quelconque des revendications 1 à 6 et la revendication 4,
**caractérisé en ce qu'**au moins un pistolet de rinçage est branché ou peut être branché à l'accumulateur de pression (7), lequel pistolet est relié respectivement peut être relié respectivement à la ou les chambres de contrôle (3) par des conduites de branchement séparées pouvant être mises en circuit ou hors circuit en cas de besoin à l'aide d'organes d'arrêt.

8. Dispositif de contrôle selon l'une quelconque des revendications 1 à 7,
**caractérisé par** un circuit fermé dans lequel le milieu de contrôle peut être recyclé dans l'accumulateur de pression (7) par le biais d'une conduite de raccordement (5) faisant partie du dispositif de contrôle, de préférence respectivement depuis la chambre de contrôle (3), en particulier par le biais d'un préfiltre (12), d'un récipient collecteur (13) et/ou d'un ou plusieurs groupes filtrants (9), de préférence à l'aide d'une pompe de recyclage (14).
